# EUROPEAN PATENT SPECIFICATION

(11) **EP 3 564 354 B1**
(45) Date of publication and mention of the grant of the patent: **26.08.2026**
(21) Application number: 19171789.1
(22) Date of filing: 30.04.2019
(51) Int. Cl.: C12L 9/00, B65D 81/20, B65D 81/24, C12G 1/02, C12H 1/14, C12H 1/22

(54) **DEVICE FOR SEALING A WOODEN BARREL**
VORRICHTUNG ZUM VERSCHLIESSEN EINES HOLZFASSES
DISPOSITIF POUR SCELLER UN FÛT EN BOIS

(30) Priority: 02.05.2018 AU 2018203047; 03.05.2018 AU 2018100577
(43) Date of publication of application: 06.11.2019
(73) Proprietor: Popa, Vitalie, Irymple, Victoria 3498 (AU); auric barrels d.o.o., 31500 Nasice (HR)
(72) Inventor: POPA, Vitalie, Victoria 3498 (AU)
(74) Representative: WENDE IP GbR

(56) References cited:
- WO-A1-2012/017110
- US-A1- 2002 117 474
- US-A1- 2012 204 728

## Description

### Background of the Invention

The present invention relates to the field of fermentation and in particular to the fermentation and/or aging of food or beverages using wooden barrels.

When fermenting or aging wine, beer, cider, spirits or other food or beverages in wooden barrels or when collecting tasting or laboratory samples, oxidation and product losses occur, particularly through evaporation of liquid from the barrel and air entering the barrel. There is nothing in the wine-making industry which addresses these issues fully.

Losses may occur through bungs provided on the wine barrels. Traditional bungs made of wood, silicone or rubber on wooden barrels do not provide a 100% seal due to differences between the outside pressure, temperature and humidity compared with the inside of the barrel. With the varying pressure, temperature, and humidity, oxidation within and evaporation losses from the barrel continuously occur. Oxidation is undesirable as it reduces the quality of the wine.

Macro and micro-oxidation may be partly controlled by the anti-oxidative effects of sulphur dioxide (SO2) which is added to the product inside the barrel and the SO2 level periodically checked and adjusted as required. Evaporation may be partly controlled by controlling the temperature and humidity of the cellar in which the barrels are stored. It is also known for brewers, wine makers and distillers to top up barrels periodically.

There is a need in the industry to provide a device and method which addresses the problems associated with oxidation and evaporation and most notably product losses which occur during fermentation and aging in wooden barrels or at the very least ameliorate one or more disadvantages or limitations associated with the prior art.

It is to be appreciated that any discussion of documents, devices, acts or knowledge in this specification is included to explain the context of the present invention. Further, the discussion throughout this specification comes about due to the realisation of the inventor and/or the identification of certain related art problems by the inventor. Moreover, any discussion of material such as documents, devices, acts or knowledge in this specification is included to explain the context of the invention in terms of the inventor's knowledge and experience and, accordingly, any such discussion should not be taken as an admission that any of the material forms part of the prior art base or the common general knowledge in the relevant art in Australia, or elsewhere, on or before the priority date of the disclosure and claims herein.
WO 2012/017110 A1 relates to controlling the evolution of an alcoholic beverage placed in one or more tanks by controlling a surrounding or contiguous tank- external atmosphere by applying a pressure that may vary, adopting a specific profile of values over time, of a value equal to, greater than or less than atmospheric pressure, using, to that end, a pressurization system that provides or removes a gas, gases or fluids from said external atmosphere, giving rise to an interaction between said external atmosphere and the inside of the tank..
US 2002/117474 A1 relates to a barrel of the present invention containing a removable trapdoor which fits snugly into an aperture in the barrel and which is easily removed from the aperture, thereby providing for easy access to the interior of the barrel.
US 2012204728 A1 relates to a container assembly for retaining a liquid during aging of the liquid, comprising a container and an oxygenator.

### Brief summary of the invention

In a first aspect, the present invention provides a device for sealing a wooden barrel containing a fermentable or fermented food or beverage as defined in claim 1. Further aspects and preferred embodiments are defined in the appended claims.

It is presently impossible to control the pressure in a wine barrel fitted with a bung and because little wine travels into the staves, a long aging process is required. Surprisingly the inventor has found that by using the device of the present invention a wooden barrel, such as a wine barrel, can be, at least in one embodiment, substantially or completely sealed thereby creating a sealed confined space within the barrel. When a barrel is empty and under positive or negative pressure, the wood channels are dry and may leak. In one embodiment, when the barrel contains a liquid under positive pressure, the liquid fills the wood channels, thereby locking them and creating a substantially 100% sealed confined space. In another embodiment, when the barrel contains liquid under negative pressure, the liquid is drawn away from the wood channels also creating a substantially 100% sealed confined space. In one or more embodiments, the device may suitably include a self-release (or self-relief) valve allowing for safe operation in the pressurised environment by controlling the pressure in the barrel.

In at least one embodiment, oxidation is substantially or 100% controlled by pushing any air (or oxygen) out of the barrel and replacing it with a blanket of neutral (or inert) gas or gases. In at least one embodiment, this is achieved using a sparger or filter. In at least another embodiment, oxidation is substantially or 100% controlled by decreasing the pressure in the barrel by pumping any oxygen out of the barrel, for example by using a vacuum pump. In one or more embodiments, no preservatives, such as sulphur dioxide, are required.

In at least one embodiment, evaporation is substantially or from 90% to 100% controlled by placing and/or maintaining the contents of the barrel under positive or negative pressure (depending on the product specific gravity (SG) and the technological process in place, for example, maceration, fermentation or aging). In at least one embodiment, no topping up of a barrel is required. In at least one embodiment, by use of pressure in accordance with the invention, it is also possible to control the temperature inside the barrel.

In a second aspect, the invention provides a process of treating a fermentable or fermented food beverage comprising:
placing the fermentable or fermented food or beverage into a wooden barrel including an aperture;
sealing the aperture with a device according to the first aspect;
placing and/or maintaining the contents of the barrel under pressure by means of the at least one fitting provided in the cover.

In a third aspect, the invention provides a wooden barrel including a device of the first aspect.

### Brief description of the Drawings

The invention will now be described with reference to the following non-limiting drawings.
Figure 1 is a photograph of a wooden wine barrel including an aperture for use in the process of the present invention.
Figure 2 is a cross-section of the device of the invention shown in place on the wooden wine barrel.
Figure 3 is a photograph of a wine barrel including the device of the invention fixed onto the wooden wine barrel.
Figure 4 is a photograph of parts of another exemplary device.
Figure 5 is a photograph of another exemplary device.

### Detailed description of the Invention

The present invention relates to a device for sealing a wooden barrel, such as a wine barrel, containing a fermentable or fermented food or beverage comprising a cover for sealing engagement with an aperture present in the barrel, wherein the cover is provided with at least one fitting for placing and/or maintaining the contents of the barrel under pressure. The present invention also relates to a process of treating a fermentable or fermented food or beverage, wherein the method comprises placing the fermentable or fermented food or beverage into a wooden barrel including an aperture; sealing the aperture with the device for sealing the wooden barrel; and placing and/or maintaining the contents of the barrel under pressure by means of the at least one fitting provided in the cover. The wooden barrel may be an oak barrel, for example a 300L oak barrel (having a bilge diameter of about 0.77m). It will be appreciated that the wooden barrel may be made from a different timber. The aperture may be a factory hole already present in the barrel, such as a bung hole or alternatively, the aperture may be a hole drilled into the barrel or a modified bung hole. The aperture may have a diameter of up to 12,7 cm (5 inches).

In one or more embodiments, the fitting for placing and/or maintaining the contents of the barrel under pressure increases, maintains or decreases the pressure in the barrel. Pressure can be controlled continuously or non-continuously. In one or more embodiments, fittings provided in the cover for placing and/or maintaining the contents of the barrel under pressure may include at least one of (i) a self-release valve (safety-relief valve), (ii) a sparger or filter for the introduction of pressurised gas/liquid or a mixture of gases/liquids into the barrel or (iii) a vacuum outlet for connection to a vacuum pump for sucking gases out of the barrel. The sparger suitably includes a one way valve inside the barrel. In this regard, whether or not a sparger or filter is used depends on the size of the holes present. Suitable gases which can be introduced include compressed air, oxygen, carbon dioxide, nitrogen, and/or argon. The gases may be filtered. It will be appreciated that carbon dioxide, nitrogen and argon may also function as a preservative. Other gases can also be used provided they are permitted by the food industry. By use of certain gases, an aerobic or anaerobic environment or a mixture of aerobic and anaerobic environments can be created in the barrel. Although not strictly required because evaporation can be controlled, if desired liquid can be transferred from one barrel to another barrel under pressure to top up a barrel (i.e. topping under pressure). It will be appreciated that increasing or positive pressure can be achieved by introduction of gases/liquids under pressure. Decreasing or negative pressure can be achieved by pumping gases and/or liquid out of the barrel. It will be appreciated that a suitable fitting for decreasing pressure is a vacuum pump set at various negative pressures (for example, -0.1 to -1 bar, e.g., -0.3 bar).

In one or more embodiments, the pressure within the vessel can be continuously controlled by releasing pressure using the self-release valve as required. In use, suitably the self-release valve is set to a value of 0.1 to 1 bar or more, e.g., 0.6 or 1 bar. Depending on the construction and barrel design including the thickness of the staves and the number of hoops on the barrel, the release pressure value can be increased to more than 1 bar.

Whilst the cover comprises a sparger or filter for introduction of at least one pressurized gas or liquid into the barrel, it will be appreciated that gases, such as carbon dioxide, can be generated in the reactions occurring in the barrel, for example during fermentation. Reactions occurring within the barrel can be oxidative or reductive. The barrel may be rotated as desired.

The process can be used for treating wine, cider, vinegar, beer or spirits or other food or beverage suitable for maceration, fermentation or aging in a wooden barrel. For example, the barrel contains fruit berries, whole-bunch grapes, grape berries, grape juice, apple pulp, apple juice or barley. The grapes may be red or white grapes which have been destemmed, crushed and sorted (for example using a harvester such as an optical harvester). The process can be conducted during one or more of maceration (including post-fermentation maceration), fermentation (including malolactic fermentation), post-fermentation, aging (including storage on lees), clarification and/or stabilisation.

The cover of the device includse additional fittings mounted therein. The additional fittings can be mounted in holes provided in the cover. For example there may be 4 or 6 or more holes provided in the cover. As additional fittings, the cover may further comprise one or more of (a) a sensor for determining temperature inside the barrel; (b) a pressure sensor or gauge for determining pressure inside the barrel; (c) an additions and sampling tap; (d) a cooler inlet and a cooler outlet; (e) a filter outlet and/or (f) a cleaning inlet. It will be appreciated that a fitting may serve more than one purpose. For example, the fitting may function as both an addition port and a sparger/filter. In this regard, an addition and sampling tap may use the same sparger or filter fitting to make additions or to take samples out of the barrel by connecting and disconnecting the fittings. Additives may include yeast and preservatives such as sulphur dioxide. Other potential sensors which may be provided include one or more of oxygen sensors, carbon dioxide sensors, pH sensors, sugar sensors, turbidity sensors, conductivity sensors, level sensors and/or biosensors. The various sensors may be wireless. In one embodiment the various sensors can be monitored and data forwarded to a computer or phone application for processing. In one embodiment, the additional fittings enable product to be removed from the barrel and additives added to the barrel without oxygen contact.

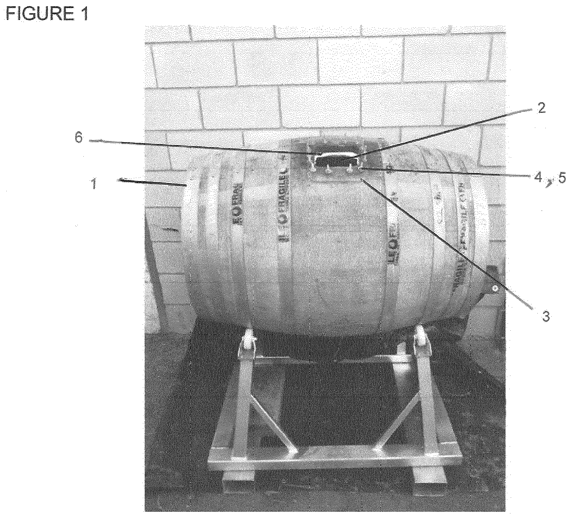

The invention will now be better understood with reference to the drawings which should not be construed as limiting on the invention. Turning to Figure 1, this Figure shows a wooden barrel 1
suitable for performing the process of the present invention. In this embodiment, the wooden barrel 1 is a wine barrel. The barrel 1 includes an aperture 2 for sealing by the device of the invention (not shown). An external frame or collar 3, suitably made of Perspex^{®}, is fixed onto the outside of the barrel 1 by means of nuts 4 rotated onto screws/bolts 5 provided through the barrel staves forming the barrel 1. A food grade rubber seal 6 surrounding the aperture 2 can be seen inside the barrel 1 and is fixed to the barrel staves by means of the screws/bolts 5.

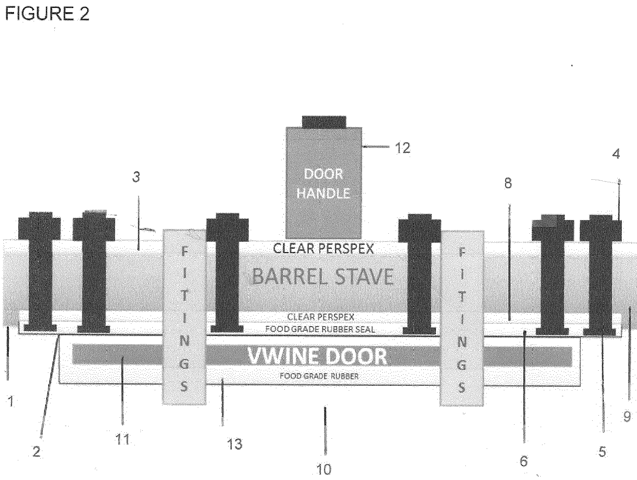

Figure 2 shows a cross-section of a device 10 in accordance with one embodiment of the invention in place on the wooden wine barrel 1. Further details regarding the frame/collar 3 can be seen in this drawing. In this regard, the inside of the barrel 1 is provided with an additional flexible frame/collar 8 (which can also be made of clear Perspex^{®}) adjacent a barrel stave 9 forming an internal wall of the barrel 1 and which is joined with the previously described rubber seal 6 surrounding the aperture 2. The previously described screws/bolts 5 attach this internal frame/collar 8 (and its associated rubber seal 6) to the stave 9 on tightening of the nuts 4 onto the screws/bolts 5. The reason for inclusion of these internal and external frames/collars is to provide an additional seal as most of the time the staves inside of the barrel are uneven and the barrel is curved. In addition, the frames/collars protect the wooden staves from being damaged during tightening of the device of the present invention onto the barrel. Turning to the device 10 of the invention, it can be seen in the drawing that the cover 11 of the device 10 on the invention is placed into the aperture 2 so that it covers the aperture 2 and provides a seal (the cover 11 has dimensions closely approximating the aperture 2). The cover 11 includes a handle 12 enabling a user to tighten the device 10 onto the barrel 1. Sealing engagement is achieved by means of the pressure created between the rubber seal 6 provided inside the barrel 1 and a food grade rubber seal 13 which is provided on the cover 11 of the device 10 of the invention. The cover 11 when placed in the aperture 2 provides a door enabling various fittings to be attached to the cover 11 for direct communication with the contents of the barrel 1, such as a self-release valve and a sparger/filter referred to below.

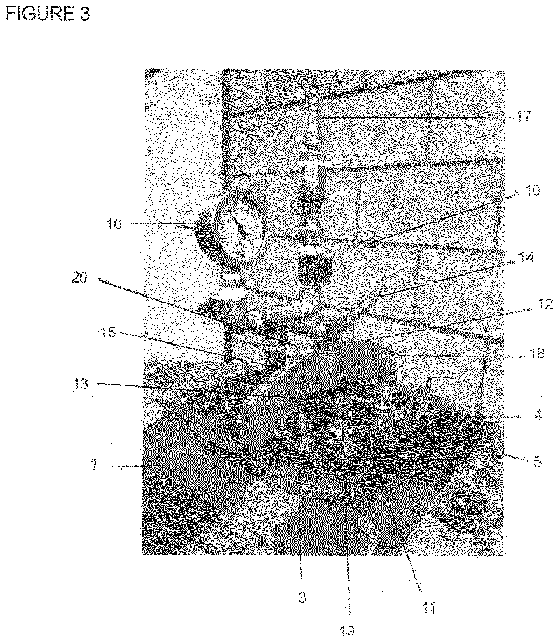

Figure 3 is a photograph showing the device 10 of the invention in place on the wine barrel 1. The cover 11 is suitably made from a suitable metal and includes a handle 12 as shown. In this regard, for tightening the cover 11 onto the barrel 1, the cover 11 is provided with an upstanding screw (part of which can be seen in the photograph) 13 onto which two purpose built fasteners 14, 15 (a lower one 15 with side wings) can be rotated. During tightening, the wings of the lower fastener 15 push onto the outside frame/collar 3. Various fittings are fitted onto the cover 11 including a pressure gauge 16 with self-release valve 17, another self-release valve
18 and a sparger/filter 19. Only partially seen in the photograph is a temperature gauge 20.

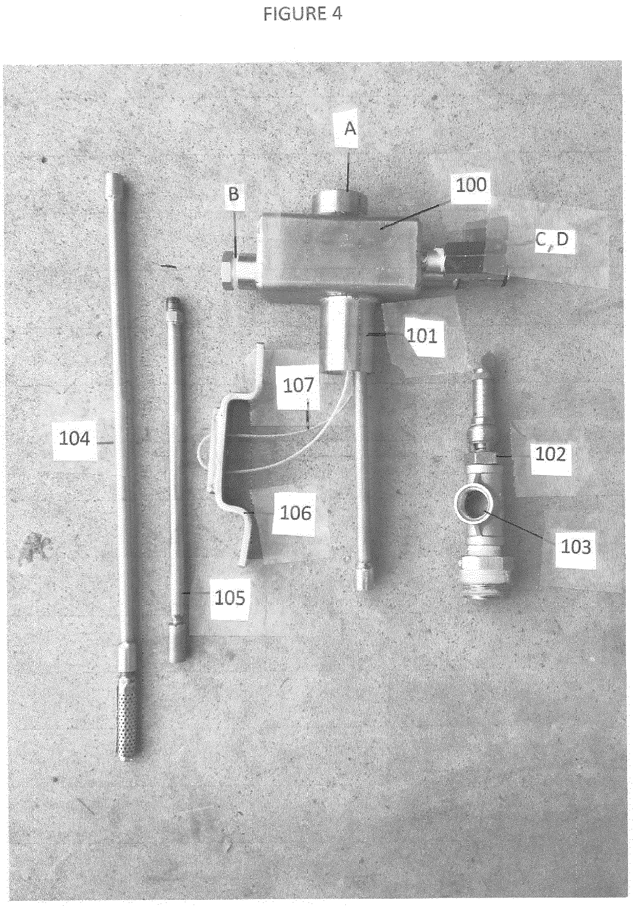

It will be appreciated that the invention can be implemented in different ways. Figure 4 shows parts of an alternate device, which does not part of the invention. In this regard, a cover 100 includes a bung portion 101 which can be fitted into an aperture or bung hole in a wine barrel (not shown). The cover 100 includes a connection (A) for a safety release valve 102. The safety release valve
102 includes a connection for a gas inlet 103 to clean the bung if blocked. The cover 100 also includes a connection (B) for connection to a pressure or temperature sensor (not shown). Other connections in the cover (C), (D) connects through the cover 100 to a sparger/filter 104 and filter
105 and appropriate gas supply or pump (not shown). An internal frame member 106 is connected to the cover by a cord 107 and retains the device in place during use by tightening the cord 107. In use, a food-grade rubber seal (not shown) may be provided around the bung portion 101.

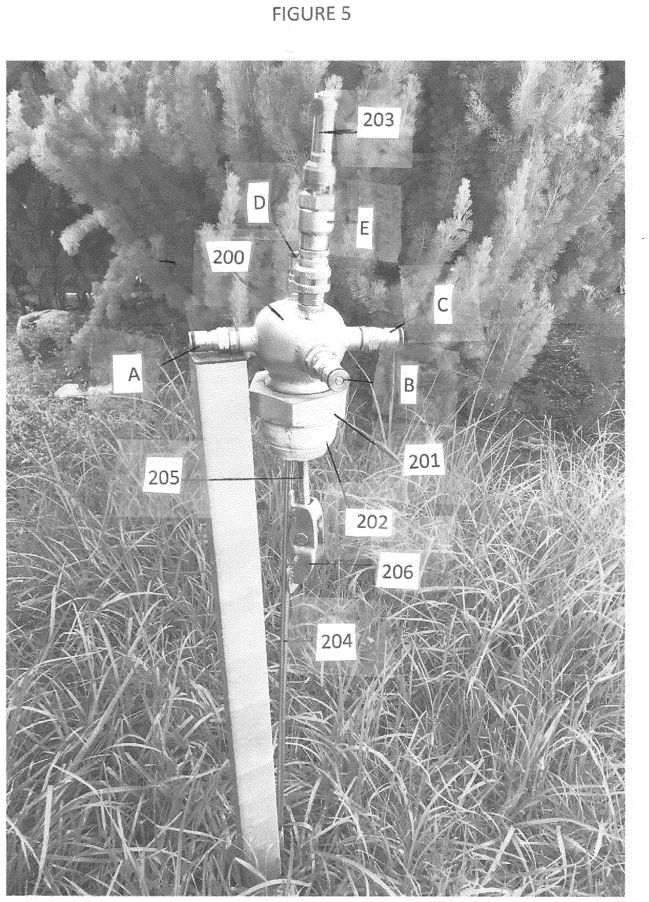

Another alternate device, which does not part of the invention, is shown in Figure 5. In this embodiment the cover includes a bulbous portion 200 which is screwed onto a hexagonal (or round) nut 201 and includes a bung portion 202 provided with a food grade seal. The bulbous portion includes various connection points (A, B, C, D and E) including a connection to a pressure release valve 203, to gas supply or pump (not shown) and through the cover to a filter/sparger 204. In use, an external frame in the form of bung having a food-grade seal and an internal hole is placed in the bung hole of the barrel (not shown). The external frame includes external ribs onto which the device of the invention can be mounted. Seated in the internal hole of the external frame is an internal collar (not shown) including a downward portion 205 onto which an internal frame member 206 is rotatably mounted which retains the device in place on the barrel during use and functions as an internal clamp.

The present invention provides a device to safely increase (for example creating a positive pressure), maintain and decrease pressure (for example by creating a negative pressure or a vacuum) inside a wooden barrel, such as wine barrel. It should be noted that negative pressure is also termed vacuum pressure. The invention has the advantage that by placing and/or maintaining the contents of the barrel under pressure, product losses by evaporation are reduced, particularly during aging time and it is not necessary to top up the barrel. There is also more extraction out of the barrel staves into the beverage during aging, especially when pressure control is used in the presence of higher temperatures during maceration and fermentation. By use of the invention, it is possible to control evaporation and macro and micro-oxidation or reductive processes during fermentation and aging. It is possible to control the environment in each individual barrel and there is no requirement to store the barrel with temperature or humidity control.

Other advantages of the invention include that by conducting the process anaerobically, for example using carbon dioxide, nitrogen or argon under pressure, it is possible to reduce the amount of preservatives added (by adding at a lower rate) or even conducting the process preservative free resulting in high quality products. In addition, labour, waste and equipment requirements are minimised (no temperature or humidity control is required). In addition, lees can be mixed inside the barrel and samples can also be removed from the barrel without oxygen contact. The process is more sustainable than previous processes for example, by extending the life of old barrels.

Throughout this specification and the claims that follow, unless the context requires otherwise the words "comprise", "comprises", "comprising" will be understood to mean the inclusion of the stated integer, step or group of integers or steps but not the exclusion of any of other integer, step or group of integers or steps.

## Claims

1. A device (10) for sealing a wooden barrel (1) containing a fermentable or fermented food or beverage comprising:
a cover (11) for sealing engagement with an aperture (2) present in the barrel (1), wherein the cover (11) is provided with at least one fitting for placing and/or maintaining the contents of the barrel (1) under pressure (1), **characterized in that**
the device (10) further comprises an external frame (3) fixed on the outside of the barrel (1), a food grade rubber seal (6) surrounding the aperture (2) and fixed inside the barrel (1), and a flexible internal frame (8) joined with the rubber seal (6) and fixed inside the barrel (1), wherein the rubber seal (6) together with the external and internal frames (3, 8) are configured to provide an additional seal and to protect wooden staves of the barrel (1).

2. The device (10) according to claim 1, wherein a pressure increase is created by a positive pressure and the pressure decrease is created by a negative pressure or vacuum inside the barrel (1).

3. The device (10) according to claim 1 or 2, wherein the cover (11) comprises at least oneself-release valve (17) and/or wherein the cover (11) comprises a sparger or filter for introduction of at least one pressurized gas into the barrel (1) and/or the cover (11) comprises a vacuum outlet for connection to a vacuum pump.

4. The device (10) according to any one of claims 1 to 3, wherein the cover (11) further comprises one or more of:
(i) a sensor (20) for determining temperature within the barrel (1);
(ii) a pressure sensor or gauge (16) for determining pressure inside the barrel (1);
(iii) an additions and sampling tap; and/or
(iv) a cooler inlet and a cooler outlet.

5. A process of treating a fermentable or fermented food or beverage comprising: placing the fermentable or fermented beverage into a wooden barrel (1) including an aperture (2); sealing the aperture (2) with a device (10) according to any one of claims 1 to 4; and placing and/or maintaining the contents of the barrel (1) under pressure by means of the at least one fitting provided in the cover (11).

6. The process according to claim 5, wherein the pressure is increased by creating a positive pressure and the pressure is decreased by creating a negative pressure or a vacuum inside the barrel (1).

7. The process according to claim 5 or 6 comprising controlling the pressure within the barrel (1) by releasing pressure using at least one self-release valve (17) as required and wherein the self-release valve is preferably set to release at a value of 0.1 to 1 bar.

8. The process according to any one of claims 5 to 7, wherein the wooden barrel (1) is a wine barrel.

9. The process according to any one of claims 5 to 8, wherein the beverage is wine, cider, beer, vinegar, spirits or any other food or beverage suitable for maceration, fermentation, post-fermentation, aging, clarification, stabilisation and/or fining in a wooden barrel (1).

10. The process according to any one of claims 5 to 9, wherein the process is conducted during one or more of maceration, fermentation, post-fermentation, aging, clarification, stabilisation and/or fining.

11. The process according to any one of claim 5 to 10, comprising introducing gas or a mixture of gases into the barrel (1), wherein the gas or mixture of gases is preferably compressed air, oxygen, carbon dioxide, nitrogen and/or argon.

12. A wooden barrel (1) including the device (10) of any one of claims 1 to 4.

13. A process for producing wine including the steps of maceration, fermentation and aging within a wooden barrel (1) using the device (10) according to any one of claims 1 to 4, wherein the pressure within the barrel (1) is continuously controlled by releasing pressure using a self-release valve (17) that is included in the cover (11) of the device (10).

## Patentansprüche

1. Vorrichtung (10) zum dichten Verschließen eines Holzfasses (1), das ein fermentierbares oder fermentiertes Lebensmittel oder Getränk enthält, aufweisend:
einen Deckel (11) zum abdichtenden Zusammenwirken mit einer im Fass (1) vorhandenen Öffnung (2), wobei der Deckel (11) mit mindestens einer Armatur versehen ist, um den Inhalt des Fasses (1) unter Druck zu setzen und/oder diesen aufrechtzuerhalten, **dadurch gekennzeichnet, dass**
die Vorrichtung (10) darüber hinaus einen Außenrahmen (3), der an der Außenseite des Fasses (1) befestigt ist, eine Dichtung (6) aus lebensmitteltauglichem Gummi (6), welche die Öffnung (2) umgibt und innerhalb des Fasses (1) befestigt ist, und einen flexiblen Innenrahmen (8) aufweist, der mit der Gummidichtung (6) verbunden und innerhalb des Fasses (1) befestigt ist, wobei die Gummidichtung (6) zusammen mit dem Außen- und Innenrahmen (3, 8) dafür ausgelegt ist, eine zusätzliche Dichtung bereitzustellen und Holzdauben des Fasses (1) zu schützen.

2. Vorrichtung (10) nach Anspruch 1, wobei ein Druckanstieg durch einen Überdruck erzeugt wird und eine Druckabnahme durch einen Unterdruck oder ein Vakuum innerhalb des Fasses (1) erzeugt wird.

3. Vorrichtung (10) nach Anspruch 1 oder 2, wobei der Deckel (11) mindestens ein selbsttätiges Entlastungsventil (17) und/oder ein Einblaselement oder einen Filter zum Einleiten mindestens eines Druckgases in das Fass (1) aufweist, und/oder wobei der Deckel (11) einen Vakuumauslass zum Anschluss an eine Vakuumpumpe aufweist.

4. Vorrichtung (10) nach einem der Ansprüche 1 bis 3, wobei der Deckel (11) darüber hinaus eines oder mehrere der folgenden Elemente aufweist:
(i) einen Sensor (20) zum Bestimmen einer Temperatur im Fass (1);
(ii) einen Drucksensor oder ein Druckmessgerät (16) zum Bestimmen eines Drucks innerhalb des Fasses (1);
(iii) einen Zugabe- und Probenentnahmehahn; und/oder
(iv) einen Kühlereinlass und einen Kühlerauslass.

5. Verfahren zum Behandeln eines fermentierbaren oder fermentierten Lebensmittels oder Getränks, umfassend: Einbringen des fermentierbaren oder fermentierten Getränks in ein Holzfass (1), das eine Öffnung (2) enthält; dichtes Verschließen der Öffnung (2) mit einer Vorrichtung (10) nach einem der Ansprüche 1 bis 4; und Beaufschlagen des Inhalts des Fasses (1) mit Druck und/oder Aufrechterhalten des Druck mittels mindestens einer Armatur, die im Deckel (11) vorgesehen ist.

6. Verfahren nach Anspruch 5, wobei der Druck erhöht wird, indem ein Überdruck erzeugt wird, und der Druck gesenkt wird, indem ein Unterdruck oder ein Vakuum innerhalb des Fasses (1) erzeugt wird.

7. Verfahren nach Anspruch 5 oder 6, umfassend, den Druck im Fass (1) zu steuern, indem der Druck nach Bedarf mithilfe mindestens eines selbsttätigen Entlastungsventils (17) abgelassen wird, und wobei das selbsttätige Entlastungsventil vorzugsweise so eingestellt ist, dass es bei einem Wert von 0,1 bis 1 bar aufmacht.

8. Verfahren nach einem der Ansprüche 5 bis 7, wobei es sich bei dem Holzfass (1) um ein Weinfass handelt.

9. Verfahren nach einem der Ansprüche 5 bis 8, wobei es sich bei dem Getränk um Wein, Cider, Bier, Essig, Spirituosen oder ein anderes Lebensmittel oder Getränk handelt, das für eine Mazeration, Fermentation, Nachfermentation, Reifung, Klärung, Stabilisierung und/oder Schönung in einem Holzfass (1) geeignet ist.

10. Verfahren nach einem der Ansprüche 5 bis 9, wobei das Verfahren während einer Mazeration, Fermentation, Nachfermentation, Reifung, Klärung, Stabilisierung und/oder Schönung durchgeführt wird.

11. Verfahren nach einem der Ansprüche 5 bis 10, umfassend, ein Gas oder ein Gasgemisch in das Fass (1) einzuleiten, wobei es sich bei dem Gas oder Gasgemisch vorzugsweise um Druckluft, Sauerstoff, Kohlendioxid, Stickstoff und/oder Argon handelt.

12. Holzfass (1) mit der Vorrichtung (10) nach einem der Ansprüche 1 bis 4.

13. Verfahren zur Herstellung von Wein, umfassend die Schritte der Mazeration, Fermentation und Reifung in einem Holzfass (1) mithilfe der Vorrichtung (10) nach einem der Ansprüche 1 bis 4, wobei der Druck in dem Fass (1) fortlaufend gesteuert wird, indem er mithilfe eines selbsttätigen Entlastungsventils (17) abgelassen wird, das im Deckel (11) der Vorrichtung (10) enthalten ist.

## Revendications

1. Dispositif (10) destiné à fermer de manière étanche un fût en bois (1) contenant un aliment ou une boisson fermentescible ou fermenté(e), comprenant :
un couvercle (11) destiné à coopérer de manière étanche avec une ouverture (2) ménagée dans le fût (1), le couvercle (11) étant pourvu d'au moins un organe de robinetterie destiné à mettre sous pression le contenu du fût (1) et/ou à maintenir cette pression, **caractérisé en ce que**
le dispositif (10) comprend en outre un cadre extérieur (3) fixé sur la face extérieure du fût (1), un joint en caoutchouc (6) de qualité alimentaire entourant l'ouverture (2) et fixé à l'intérieur du fût (1), ainsi qu'un cadre intérieur flexible (8) relié au joint en caoutchouc (6) et fixé à l'intérieur du fût (1), le joint en caoutchouc (6), conjointement avec le cadre extérieur et le cadre intérieur (3, 8), étant conçu pour assurer une étanchéité supplémentaire et protéger les douelles en bois du fût (1).

2. Le dispositif (10) selon la revendication 1, dans lequel une augmentation de la pression est obtenue par la création d'une surpression, et une diminution de la pression est obtenue par la création d'une dépression ou d'un vide à l'intérieur du fût (1).

3. Le dispositif (10) selon la revendication 1 ou 2, dans lequel le couvercle (11) comprend au moins une soupape de décharge automatique (17) et/ou un élément d'injection ou un filtre destiné à introduire au moins un gaz sous pression dans le fût (1), et/ou dans lequel le couvercle (11) comprend un orifice de vide destiné au raccordement à une pompe à vide.

4. Le dispositif (10) selon l'une quelconque des revendications 1 à 3, dans lequel le couvercle (11) comprend en outre un ou plusieurs des éléments suivants :
(i) un capteur (20) destiné à déterminer une température dans le fût (1) ;
(ii) un capteur de pression ou un manomètre (16) destiné à déterminer une pression à l'intérieur du fût (1) ;
(iii) un robinet d'ajout et de prélèvement d'échantillons ; et/ou
(iv) une entrée de refroidisseur et une sortie de refroidisseur.

5. Procédé de traitement d'un aliment ou d'une boisson fermentescible ou fermenté(e), comprenant : l'introduction de la boisson fermentescible ou fermentée dans un fût en bois (1) comportant une ouverture (2) ; la fermeture étanche de l'ouverture (2) au moyen d'un dispositif (10) selon l'une quelconque des revendications 1 à 4 ; et la mise sous pression du contenu du fût (1) et/ou le maintien de ladite pression au moyen d'au moins un organe de robinetterie prévu dans le couvercle (11).

6. Le procédé selon la revendication 5, dans lequel la pression est augmentée par la création d'une surpression, et la pression est réduite par la création d'une dépression ou d'un vide à l'intérieur du fût (1).

7. Le procédé selon la revendication 5 ou 6, comprenant la régulation de la pression dans le fût (1) en évacuant la pression selon les besoins au moyen d'au moins une soupape de décharge automatique (17), et dans lequel la soupape de décharge automatique est de préférence réglée de manière à s'ouvrir à une valeur comprise entre 0,1 et 1 bar.

8. Le procédé selon l'une quelconque des revendications 5 à 7, dans lequel le fût en bois (1) est un fût à vin.

9. Le procédé selon l'une quelconque des revendications 5 à 8, dans lequel la boisson est du vin, du cidre, de la bière, du vinaigre, des spiritueux ou un autre aliment ou une autre boisson approprié(e) pour une macération, une fermentation, une post-fermentation, un vieillissement, une clarification, une stabilisation et/ou un collage dans un fût en bois (1).

10. Le procédé selon l'une quelconque des revendications 5 à 9, dans lequel le procédé est réalisé pendant une macération, une fermentation, une post-fermentation, un vieillissement, une clarification, une stabilisation et/ou un collage.

11. Le procédé selon l'une quelconque des revendications 5 à 10, comprenant l'introduction d'un gaz ou d'un mélange gazeux dans le fût (1), le gaz ou le mélange gazeux étant de préférence de l'air comprimé, de l'oxygène, du dioxyde de carbone, de l'azote et/ou de l'argon.

12. Fût en bois (1) comprenant le dispositif (10) selon l'une quelconque des revendications 1 à 4.

13. Procédé de fabrication de vin, comprenant les étapes de macération, de fermentation et de vieillissement dans un fût en bois (1) au moyen du dispositif (10) selon l'une quelconque des revendications 1 à 4, dans lequel la pression dans le fût (1) est régulée en continu par évacuation au moyen d'une soupape de décharge automatique (17) comprise dans le couvercle (11) du dispositif (10).
